# EUROPÄISCHE PATENTANMELDUNG

(11) **EP 3 512 163 A1**
(43) Veröffentlichungstag der Anmeldung: **17.07.2019**
(21) Anmeldenummer: 18151421.7
(22) Anmeldetag: 12.01.2018
(51) Int. Cl.: H04L 12/40

(54) **ÜBERTRAGEN VON SIGNALEN**

(71) Anmelder: Siemens Aktiengesellschaft, 80333 München (DE)
(72) Erfinder: Kraus, Ludwig, 94099 Ruhstorf (DE); Maul, Christian, 90409 Nürnberg (DE); Müller, Volker, 90408 Nürnberg (DE)

(57) **Zusammenfassung**

Die Erfindung betrifft eine Signalübertragungsvorrichtung (1). Die Signalübertragungsvorrichtung (1) umfasst mehrere hintereinander geschaltete Signalverteilungsmodule (3 bis 8), wobei je zwei benachbarte Signalverteilungsmodule (3 bis 8) miteinander durch eine Signalbrücke (9 bis 13) verbunden sind, die eine Schnittstelle (14,15) eines der beiden Signalverteilungsmodule (3 bis 8) mit einer dazu korrespondierenden Schnittstelle (14,15) des anderen Signalverteilungsmoduls (3 bis 8) verbindet. Ferner umfasst die Signalübertragungsvorrichtung (1) wenigstens eine Direktverbindung zwischen zwei Signalverteilungsmodulen (3 bis 8), die durch wenigstens eine Signalbrücke (9 bis 13) und über die durch die Signalbrücke (9 bis 13) verbundenen Schnittstellen (14, 15) geführt ist, und einen durch alle Signalbrücken (9 bis 13) und über alle Schnittstellen (14,15) geführten Signalübertragungsbus (28). Die Schnittstellen (14,15) aller Signalverteilungsmodule (3 bis 8) sind identisch ausgeführt und alle Signalbrücken (9 bis 13) verbinden zwei Schnittstellen (14,15) auf dieselbe Weise.

## Beschreibung

Die Erfindung betrifft eine Signalübertragungsvorrichtung und ein Verfahren zum Übertragen von Signalen.

Insbesondere betrifft die Erfindung die Übertragung von Signalen, an die unterschiedliche Latenzanforderungen gestellt werden, durch modular aufgebaute Signalübertragungsvorrichtungen. Unter einer Latenzanforderung an ein Signal wird hier eine dem Signal zugeordnete maximale Signallaufzeit zwischen einem Sender und einem Empfänger verstanden. Eine Latenzanforderung an ein Signal ist dabei umso höher je kleiner die dem Signal zugeordnete maximale Signallaufzeit ist. Zur Übertragung von Signalen, an die besonders hohe Latenzanforderungen gestellt werden, werden häufig Direktverbindungen zwischen einem Sender und einem Empfänger verwendet. Eine Direktverbindung wird auch als Punkt-zu-Punkt-Verbindung (engl. point-to-point connection) bezeichnet. In modular aufgebauten Signalübertragungsvorrichtungen wird eine Direktverbindung zwischen zwei Modulen in der Regel durch eine separate Übertragungsleitung zwischen den beiden Modulen realisiert. Zur Übertragung von Signalen, an die geringere Latenzanforderungen gestellt werden, werden dagegen meist Übertragungsleitungen verwendet, die eine Vielzahl von Modulen miteinander verbinden und beispielsweise durch ein Bussystem realisiert sind. Die Realisierung von Direktverbindungen durch jeweils einzelne Übertragungsleitungen führt zu einer hohen Komplexität und hohen Kosten einer Signalübertragungsvorrichtung.

Der Erfindung liegt die Aufgabe zugrunde, eine Signalübertragungsvorrichtung und ein Verfahren zum Übertragen von Signalen anzugeben, die insbesondere hinsichtlich der Realisierung von Direktverbindungen verbessert sind.

Die Aufgabe wird erfindungsgemäß durch eine Signalübertragungsvorrichtung mit den Merkmalen des Anspruchs 1 und durch ein Verfahren mit den Merkmalen des Anspruchs 15 gelöst.

Vorteilhafte Ausgestaltungen der Erfindung sind Gegenstand der Unteransprüche.

Eine erfindungsgemäße Signalübertragungsvorrichtung umfasst mehrere hintereinander geschaltete Signalverteilungsmodule. Je zwei benachbarte Signalverteilungsmodule sind miteinander durch eine Signalbrücke verbunden, die eine Schnittstelle eines der beiden Signalverteilungsmodule mit einer dazu korrespondierenden Schnittstelle des anderen Signalverteilungsmoduls verbindet. Ferner umfasst die Signalübertragungsrichtung wenigstens eine Direktverbindung zwischen zwei Signalverteilungsmodulen, die durch wenigstens eine Signalbrücke und über die durch die Signalbrücke verbundenen Schnittstellen geführt ist, und einen durch alle Signalbrücken und über alle Schnittstellen geführten Signalübertragungsbus. Die Schnittstellen aller Signalverteilungsmodule sind identisch ausgeführt, und alle Signalbrücken verbinden zwei Schnittstellen auf dieselbe Weise.

Die Signalübertragungsvorrichtung ermöglicht die Signalübertragung zwischen Signalverteilungsmodulen einerseits über wenigstens eine Direktverbindung (Punkt-zu-Punkt-Verbindung) und andererseits über einen Signalübertragungsbus. Insbesondere ermöglicht dies die Übertragung von Signalen, an die besonders hohe Latenzanforderungen gestellt werden, über eine Direktverbindung, während Signale, an die keine besonders hohen Latenzanforderungen gestellt werden, über den Signalübertragungsbus übertragen werden können. Sowohl die Direktverbindungen als auch der Signalübertragungsbus werden zwischen den Signalverteilungsmodulen durch Signalbrücken geführt, die jeweils zwei Schnittstellen benachbarter Signalverteilungsmodule verbinden. Durch die identische Ausführung aller Schnittstellen und die gleichartige Verbindung der Schnittstellen durch die Signalbrücken reduziert die Erfindung vorteilhaft die Komplexität der Verbindung der Signalverteilungsmodule, insbesondere hinsichtlich der Realisierung der Direktverbindungen, gegenüber herkömmlichen modularen Signalübertragungsvorrichtungen, bei denen jede Direktverbindung durch eine separate Übertragungsleitung realisiert wird.

Eine Ausgestaltung der Erfindung sieht eine durch alle Signalbrücken und über alle Schnittstellen geführte elektrische Stromversorgungsleitung vor. Insbesondere kann vorgesehen sein, dass wenigstens ein Signalverteilungsmodul Strom aus der Stromversorgungsleitung entnimmt oder Strom in die Stromversorgungsleitung einspeist. Diese Ausgestaltung der Erfindung ermöglicht die Versorgung von Signalverteilungsmodulen mit elektrischer Energie durch eine ebenfalls durch die Signalbrücken geführte Stromversorgungsleitung. Es werden also keine zusätzlichen Stromversorgungsleitungen für die Versorgung von Signalverteilungsmodulen mit elektrischer Energie benötigt. Ferner kann auch die Einspeisung von elektrischer Energie in die Stromversorgungsleitung durch wenigstens ein Signalverteilungsmodul vorgesehen sein.

Eine weitere Ausgestaltung der Erfindung sieht eine durch alle Signalbrücken und über alle Schnittstellen geführte Fluidleitung vor. Insbesondere kann vorgesehen sein, dass wenigstens ein Signalverteilungsmodul Fluid aus der Fluidleitung entnimmt oder Fluid in die Fluidleitung einspeist. Diese Ausgestaltung der Erfindung ermöglicht das Zuführen eines Fluids zu Signalverteilungsmodulen und/oder das Abführen eines Fluids von Signalverteilungsmodulen, beispielsweise um Signalverteilungsmodule zu kühlen, durch eine ebenfalls durch die Signalbrücken geführte Fluidleitung. Es werden also keine zusätzlichen Fluidleitungen für das Zuführen und/oder Abführen des Fluids benötigt.

Eine weitere Ausgestaltung der Erfindung sieht vor, dass alle Signalbrücken gleich lang sind. Dadurch können alle Signalbrücken identisch ausgeführt werden und die Gleichteiligkeit der Komponenten der Signalübertragungsvorrichtung erhöht werden.

Eine weitere Ausgestaltung der Erfindung sieht vor, dass jede Signalbrücke ein Flachbandkabel oder eine flexible Leiterplatte aufweist. Dadurch können Signalverteilungsmodule flexibel miteinander verbunden werden.

Eine weitere Ausgestaltung der Erfindung sieht vor, dass wenigstens ein Signalverteilungsmodul zum Empfangen und/oder Senden von Signalen über den Signalübertragungsbus ausgebildet ist. Dadurch können Signalverteilungsmodule über den Signalübertragungsbus miteinander kommunizieren.

Eine weitere Ausgestaltung der Erfindung sieht Steckverbindungen vor, durch die jeweils eine Schnittstelle mit einer Signalbrücke verbindbar ist. Dies ermöglicht einfach montierbare und lösbare Verbindungen der Schnittstellen und Signalbrücken.

Eine weitere Ausgestaltung der Erfindung sieht vor, dass jede Schnittstelle eines Signalverteilungsmoduls eine Anzahl von Direktverbindungskontakten für Direktverbindungen aufweist, und dass die Direktverbindungskontakte in einer für alle Schnittstellen identischen Kontaktreihenfolge mit in dem Signalverteilungsmodul zu der Schnittstelle geführten Direktverbindungsleitungen für Direktverbindungen verbunden sind. Insbesondere kann dabei vorgesehen sein, dass in jedem Signalverteilungsmodul, in dem wenigstens eine Direktverbindung endet, die Direktverbindungsleitungen der in dem Signalverteilungsmodul endenden Direktverbindungen mit den gemäß der Kontaktreihenfolge ersten Direktverbindungskontakten einer ersten Schnittstelle des Signalverteilungsmoduls verbunden sind, und jeder weitere Direktverbindungskontakt der ersten Schnittstelle durch eine Direktverbindungsleitung mit einem Direktverbindungskontakt der zweiten Schnittstelle verbunden ist, dessen Position in der Kontaktreihenfolge um die Anzahl der ersten Direktverbindungskontakte vor der Position des mit ihm verbundenen Direktverbindungskontaktes der ersten Schnittstelle liegt. Ferner verbindet jede Signalbrücke vorzugsweise jeden Direktverbindungskontakt einer der beiden durch die Signalbrücke verbundenen Schnittstellen mit genau einem Direktverbindungskontakt der anderen der beiden durch die Signalbrücke verbundenen Schnittstellen, wobei die miteinander durch die Signalbrücke verbundenen Direktverbindungskontakte dieselbe Position in der Kontaktreihenfolge aufweisen.

Die vorgenannten Ausgestaltungen der Erfindung realisieren eine für alle Signalverteilungsmodule gleichartige Verbindung von Direktverbindungsleitungen der Signalverteilungsmodule mit den Schnittstellen. Insbesondere ermöglichen sie eine Leitungsführung von Direktverbindungsleitungen in den Signalverteilungsmodulen, bei der Direktverbindungsleitungen, die in einem Signalverteilungsmodul enden, mit festgelegten Positionen einer Schnittstelle des Signalverteilungsmoduls verbunden sind und die anderen Direktverbindungsleitungen diese Schnittstelle mit Direktverbindungskontakten der anderen Schnittstelle an eben diesen festgelegten Positionen verbinden. Dadurch wird erreicht, dass Signalverteilungsmodule, in denen Direktverbindungen enden, mit einer gleichartigen Leitungsführung ihrer Direktverbindungsleitungen versehen werden können. Auch dadurch werden die Gleichteiligkeit der Signalübertragungsvorrichtung erhöht und die Komplexität der Realisierung der Direktverbindungen vorteilhaft reduziert.

Eine weitere Ausgestaltung der Erfindung sieht vor, dass die Signalverteilungsmodule zur Steuerung oder Regelung eines Stromrichters ausgebildet sind. Insbesondere kann wenigstens ein Signalverteilungsmodul eine Treibereinheit für wenigstens eine elektronische Schalteinheit des Stromrichters aufweisen, zu der eine Direktverbindung führt. Diese Ausgestaltungen der Erfindung berücksichtigen, dass sich eine erfindungsgemäße Signalübertragungsvorrichtung insbesondere vorteilhaft für die Steuerung oder Regelung eines Stromrichters mit elektronischen Schalteinheiten eignet, da an Signale, mit denen die elektronischen Schalteinheiten eines Stromrichters angesteuert werden, besonders hohe Latenzanforderungen gestellt werden. Daher erfolgt die Ansteuerung der Schalteinheiten vorzugsweise über Direktverbindungen.

Bei dem erfindungsgemäßen Verfahren zum Übertragen von Signalen mit einer erfindungsgemäßen Signalübertragungsvorrichtung wird an erste Signale eine höhere Latenzanforderung als an zweite Signale gestellt, ein erstes Signal wird über eine Direktverbindung der Signalübertragungsvorrichtung übertragen und ein zweites Signal wird über den Signalübertragungsbus der Signalübertragungsvorrichtung übertragen. Das Verfahren berücksichtigt, dass eine Direktverbindung in der Regel eine kleinere Signallaufzeit als ein Signalübertragungsbus ermöglicht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm einer Signalübertragungsvorrichtung,
- FIG 2: einen vergrößerten Ausschnitt der in Figur 1 dargestellten Signalübertragungsvorrichtung,
- FIG 3: ein Blockdiagramm zweier Signalübertragungsvorrichtungen.

Einander entsprechende Teile sind in den Figuren mit denselben Bezugszeichen versehen.

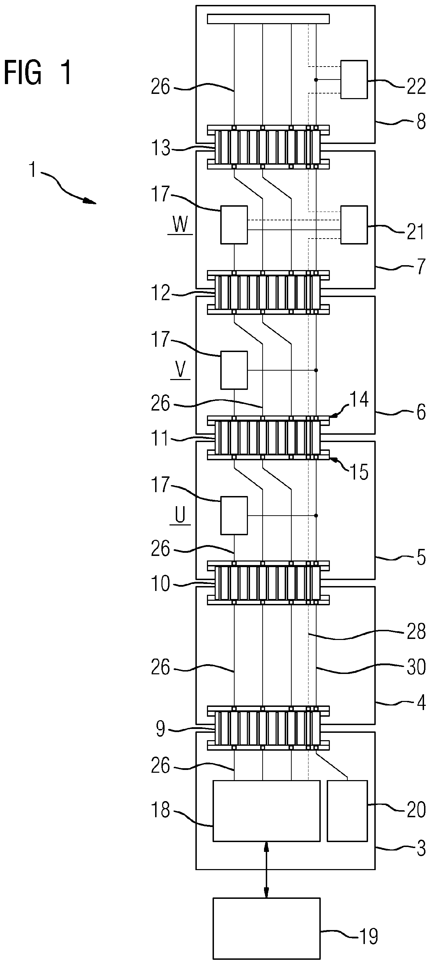

FIG 1 zeigt ein Ausführungsbeispiel einer Signalübertragungsvorrichtung 1. Die Signalübertragungsvorrichtung 1 umfasst sechs hintereinander geschaltete Signalverteilungsmodule 3 bis 8, die zur Steuerung oder Regelung eines dreiphasigen Stromrichters ausgebildet sind. Je zwei benachbarte Signalverteilungsmodule 3 bis 8 sind miteinander durch eine Signalbrücke 9 bis 13 verbunden, die eine eingangsseitige erste Schnittstelle 14 eines der beiden Signalverteilungsmodule 3 bis 8 mit einer dazu korrespondierenden ausgangsseitigen zweiten Schnittstelle 15 des anderen Signalverteilungsmoduls 3 bis 8 verbindet. Dabei verbindet eine erste Signalbrücke 9 ein erstes Signalverteilungsmodul 3 mit einem zweiten Signalverteilungsmodul 4, eine zweite Signalbrücke 10 verbindet das zweite Signalverteilungsmodul 4 mit einem dritten Signalverteilungsmodul 5, eine dritte Signalbrücke 11 verbindet das dritte Signalverteilungsmodul 5 mit einem vierten Signalverteilungsmodul 6, eine vierte Signalbrücke 12 verbindet das vierte Signalverteilungsmodul 6 mit einem fünften Signalverteilungsmodul 7, und eine fünfte Signalbrücke 13 verbindet das fünfte Signalverteilungsmodul 7 mit einem sechsten Signalverteilungsmodul 8.

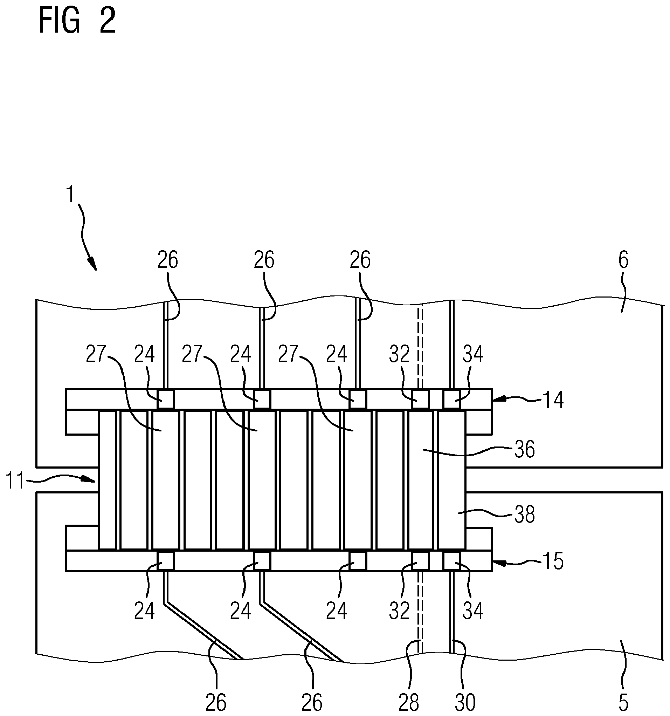

FIG 2 zeigt einen vergrößerten Ausschnitt der in FIG 1 gezeigten Signalübertragungsvorrichtung 1 im Bereich der dritten Signalbrücke 11.

Das erste Signalverteilungsmodul 3 weist eine hardwarenahe Regelungseinheit 18 und eine Stromversorgungseinheit 20 auf. Die hardwarenahe Regelungseinheit 18 wird von einer übergeordneten Regelungseinheit 19 angesteuert und ist zur Erzeugung von Signalen zur Steuerung oder Regelung des Stromrichters ausgebildet. Die Stromversorgungseinheit 20 ist zur Versorgung von Komponenten der Signalübertragungsvorrichtung 1 mit elektrischer Energie ausgebildet.

Das zweite Signalverteilungsmodul 4 verwendet weder von dem ersten Signalverteilungsmodul 3 erzeugte Signale noch von der Stromversorgungseinheit 20 bereitgestellte Energie, sondern leitet diese Signale und Energie lediglich weiter.

Das dritte Signalverteilungsmodul 5, das vierte Signalverteilungsmodul 6 und das fünfte Signalverteilungsmodul 7 weisen jeweils eine Treibereinheit 17 für wenigstens eine elektronische Schalteinheit des Stromrichters auf, beispielsweise für eine Halbbrücke zweier Bipolartransistoren mit isolierter Gate-Elektrode (IGBT = insulated-gate bipolar transistors).

Das fünfte Signalverteilungsmodul 7 und das sechste Signalverteilungsmodul 8 weisen jeweils eine Diagnoseeinheit 21, 22 zur Ermittlung eines Zustands der Signalübertragungsvorrichtung 1 auf.

Die Signalübertragungsvorrichtung 1 weist drei Direktverbindungen auf. Eine erste Direktverbindung verbindet die hardwarenahe Regelungseinheit 18 des ersten Signalverteilungsmoduls 3 mit der Treibereinheit 17 des dritten Signalverteilungsmoduls 5 und ist durch die erste Signalbrücke 9 und die zweite Signalbrücke 10 und über die durch diese Signalbrücken 9, 10 jeweils miteinander verbundenen Schnittstellen 14, 15 geführt. Eine zweite Direktverbindung verbindet die hardwarenahe Regelungseinheit 18 des ersten Signalverteilungsmoduls 3 mit der Treibereinheit 17 des vierten Signalverteilungsmoduls 6 und ist durch die Signalbrücken 9, 10, 11 und über die durch diese Signalbrücken 9, 10, 11 jeweils miteinander verbundenen Schnittstellen 14, 15 geführt. Eine dritte Direktverbindung verbindet die hardwarenahe Regelungseinheit 18 des ersten Signalverteilungsmoduls 3 mit der Treibereinheit 17 des fünften Signalverteilungsmoduls 7 und ist durch die Signalbrücken 9 bis 12 und über die durch diese Signalbrücken 9 bis 12 jeweils miteinander verbundenen Schnittstellen 14, 15 geführt.

Die Schnittstellen 14, 15 aller Signalverteilungsmodule 3 bis 8 sind identisch ausgeführt. Jede Schnittstelle 14, 15 weist drei Direktverbindungskontakte 24 für Direktverbindungen auf. Die Direktverbindungskontakte 24 jeder Schnittstelle 14, 15 eines Signalverteilungsmoduls 3 bis 8 sind in einer für alle Schnittstellen 14, 15 identischen Kontaktreihenfolge mit in dem Signalverteilungsmodul 3 bis 8 zu der Schnittstelle 14, 15 geführten Direktverbindungsleitungen 26 verbunden. In dem in Figur 1 dargestellten Beispiel ordnet die Kontaktreihenfolge die Direktverbindungskontakte 24 von links nach rechts, das heißt der linke Direktverbindungskontakt 24 ist der erste, der mittlere Direktverbindungskontakt 24 ist der zweite und der rechte Direktverbindungskontakt 24 ist der dritte der Direktverbindungskontakte 24 gemäß der Kontaktreihenfolge. Wenn eine Schnittelle 14, 15 beispielsweise mit nur zwei Direktverbindungsleitungen 26, verbunden ist (im Falle des in FIG 1 gezeigten Beispiels ist dies für die zweiten Schnittstellen 15 der Signalverteilungsmodule 5 bis 7 der Fall), dann sind demzufolge nur der linke Direktverbindungskontakt 24 und der mittlere Direktverbindungskontakt 24 mit einer Direktverbindungsleitung 26 verbunden, während der rechte Direktverbindungskontakt 24 mit keiner Direktverbindungsleitung 26 verbunden ist.

Innerhalb der jeweils eine Treibereinheit 17 aufweisenden Signalverteilungsmodule 5 bis 7 endet eine Direktverbindung an der Treibereinheit 17. Die Treibereinheit 17 ist durch eine Direktverbindungsleitung 26 mit dem gemäß der Kontaktreihenfolge ersten Direktverbindungskontakt 24 der ersten Schnittstelle 14 des Signalverteilungsmoduls 5 bis 7 verbunden. Jeder weitere Direktverbindungskontakt 24 der ersten Schnittstelle 14 ist durch eine Direktverbindungsleitung 26 mit einem Direktverbindungskontakt 24 der zweiten Schnittstelle 15 verbunden, dessen Position um Eins vor der Position des mit ihm verbundenen Direktverbindungskontaktes 24 der ersten Schnittstelle 14 liegt. In der Darstellung der FIG 1 verbindet daher gemäß der oben genannten Kontaktreihenfolge, die die Direktverbindungskontakte 24 von links nach rechts ordnet, in jedem der Signalverteilungsmodule 5 bis 7 eine erste Direktverbindungsleitung 26 die Treibereinheit 17 mit dem linken Direktverbindungskontakt 24 der ersten Schnittstelle 14, eine zweite Direktverbindungsleitung 26 verbindet den mittleren Direktverbindungskontakt 24 der ersten Schnittstelle 14 mit dem linken Direktverbindungskontakt 24 der zweiten Schnittstelle 15, und eine dritte Direktverbindungsleitung 24 verbindet den rechten Direktverbindungskontakt 24 der ersten Schnittstelle 14 mit dem mittleren Direktverbindungskontakt 24 der zweiten Schnittstelle 15.

Jede Signalbrücke 9 bis 13 verbindet jeden Direktverbindungskontakt 24 einer ersten Schnittstelle 14 mit genau einem Direktverbindungskontakt 24 einer zweiten Schnittstelle 15, wobei die miteinander durch die Signalbrücke 9 bis 13 verbundenen Direktverbindungskontakte 24 dieselbe Position in der Kontaktreihenfolge aufweisen. In der Darstellung der FIG 1 verbindet also jede Signalbrücke 9 bis 13 jeweils die beiden linken Direktverbindungskontakte 24, die beiden mittleren Direktverbindungskontakte 24 und die beiden rechten Direktverbindungskontakte 24 der beiden durch die Signalbrücke 9 bis 13 verbundenen Schnittstellen 14, 15 miteinander. Dabei sind die Direktverbindungskontakte 24 jeweils durch eine Brückendirektverbindungsleitung 27 der Signalbrücke 9 bis 13 miteinander verbunden.

Neben den Direktverbindungen weist die in FIG 1 dargestellte Signalübertragungsvorrichtung 1 einen Signalübertragungsbus 28 und eine Stromversorgungsleitung 30 auf, die jeweils durch alle Signalbrücken 9 bis 13 und über alle Schnittstellen 14, 15 geführt sind. Dazu weist jede Schnittstelle 14, 15 einen Buskontakt 32 und einen Stromleitungskontakt 34 auf. Die Buskontakte 32 zweier durch eine Signalbrücke 9 bis 13 verbundenen Schnittstellen 14, 15 sind durch ein Brückenbussegment 36 der Signalbrücke 9 bis 13 miteinander verbunden. Die Stromleitungskontakte 34 zweier durch eine Signalbrücke 9 bis 13 verbundenen Schnittstellen 14, 15 sind durch Brückenstromleitungssegment 38 der Signalbrücke 9 bis 13 miteinander verbunden.

Alle Signalbrücken 9 bis 13 verbinden zwei Schnittstellen 14, 15 auf dieselbe Weise. Lediglich die Längen der Signalbrücken 9 bis 13 können sich voneinander unterscheiden. Vorzugsweise sind jedoch auch die Längen der Signalbrücken 9 bis 13 identisch, so dass sich die Signalbrücken 9 bis 13 nicht voneinander unterscheiden. Beispielsweise sind die Signalbrücken 9 bis 13 jeweils als ein Flachbandkabel oder als eine flexible Leiterplatte ausgeführt. Ferner sind beispielsweise eine Signalbrücke 9 bis 13 und eine Schnittstelle 14, 15 über eine Steckverbindung miteinander verbindbar. Beispielsweise ist dabei jede Schnittstelle 14, 15 als der männliche Teil einer Steckverbindung ausgeführt und jede Signalbrücke 9 bis 13 weist dazu korrespondierende weibliche Teile einer Steckverbindung auf. Alternativ ist jede Schnittstelle 14, 15 als der weibliche Teil einer Steckverbindung ausgeführt und jede Signalbrücke 9 bis 13 weist dazu korrespondierende männliche Teile einer Steckverbindung auf.

Der Signalübertragungsbus 28 ist mit der hardwarenahen Regelungseinheit 18 des ersten Signalverteilungsmoduls 3, der Treibereinheit 17 und der Diagnoseeinheit 21 des fünften Signalverteilungsmoduls 7 und der Diagnoseeinheit 22 des sechsten Signalverteilungsmoduls 8 verbunden. Durch die anderen Signalverteilungsmodule 4 bis 6 ist der Signalübertragungsbus 28 in dem in FIG 1 dargestellten Ausführungsbeispiel lediglich hindurchgeführt.

Die Stromversorgungsleitung 30 ist mit der Stromversorgungseinheit 20 des ersten Signalverteilungsmoduls 3, den Treibereinheiten 17 der Signalverteilungsmodule 5 bis 7 und den Diagnoseeinheiten 21, 22 der Signalverteilungsmodule 7 und 8 verbunden. Durch das zweite Signalverteilungsmodul 4 ist der Signalübertragungsbus 28 in dem in FIG 1 dargestellten Ausführungsbeispiel lediglich hindurchgeführt.

Über die Direktverbindungen und den Signalübertragungsbus 28 werden Signale übertragen, die sich voneinander durch die an sie gestellten Latenzanforderungen unterscheiden. Erste Signale, an die eine höhere Latenzanforderung gestellt wird, werden über die Direktverbindungen übertragen. Zweite Signale, an die eine geringere Latenzanforderung gestellt wird, werden über den Signalübertragungsbus 28 übertragen.

Erste Signale sind insbesondere Steuersignale für die Treibereinheiten 17 zur Ansteuerung der Schalteinheiten des Stromrichters. Beispielsweise werden über die Direktverbindungen Steuersignale für jeweils eine Phase U, V, W des Stromrichters übertragen. In FIG 1 ist beispielsweise angedeutet, dass der Treibereinheit 17 des dritten Signalverteilungsmoduls 5 über die erste Direktverbindung Steuersignale für eine erste Phase U, der Treibereinheit 17 des vierten Signalverteilungsmoduls 6 über die zweite Direktverbindung Steuersignale für eine zweite Phase V und der Treibereinheit 17 des fünften Signalverteilungsmoduls 7 über die dritte Direktverbindung Steuersignale für eine dritte Phase W zugeführt werden.

Zweite Signale sind beispielsweise Zustandssignale mit Zustandsinformationen über Zustände von Signalverteilungsmodulen 3 bis 8, beispielsweise über eine Temperatur, eine elektrische Spannung und/oder einen elektrischen Strom.

Das in FIG 1 gezeigte Ausführungsbeispiel einer Signalübertragungsvorrichtung 1 realisiert die Signalverteilungsmodule 5 bis 7 mit einer identischen Ausführung und Anordnung der Treibereinheiten 17 und Direktverbindungsleitungen 26. Der einzige Unterschied zwischen diesen Signalverteilungsmodulen 5 bis 7 ist das Vorhandensein der Diagnoseeinheit 21 in dem Signalverteilungsmodul 7. In einer Abwandlung dieses Ausführungsbeispiel können jedoch auch die Signalverteilungsmodule 5 und 6 eine derartige Diagnoseeinheit 21 aufweisen, so dass alle Signalverteilungsmodule 5 bis 7 identisch ausgeführt sind. Ferner sind alle Signalbrücken 9 bis 13 gleichartig oder sogar identisch ausgeführt. Dadurch wird eine vorteilhaft weitgehende Gleichteiligkeit der Signalverteilungsmodule 3 bis 8 und eine Reduktion der Komplexität der Verbindung der Signalverteilungsmodule 3 bis 8, insbesondere zur Realisierung der Direktverbindungen, ermöglicht. Ferner wird eine große Flexibilität bei der Anordnung der Signalverteilungsmodule 3 bis 8 sowie bei einer nachträglichen Änderung der Reihenfolge oder Anzahl der Signalverteilungsmodule 3 bis 8 ohne zusätzlichen Entwicklungs- und Fertigungsaufwand ermöglicht.

Das in FIG 1 dargestellte Ausführungsbeispiel illustriert die Erfindung nur exemplarisch und kann in verschiedener Weise abgewandelt und erweitert werden. Beispielsweise können Signalverteilungsmodule 3 bis 8 weitere Direktverbindungen und/oder weitere oder andere mit Direktverbindungen, dem Signalübertragungsbus 28 und/oder der Stromversorgungsleitung 30 verbundene Komponenten aufweisen. Ferner kann die Signalübertragungsvorrichtung 1 beispielsweise alternativ oder zusätzlich zu der Stromversorgungsleitung 30 eine durch alle Signalbrücken 9 bis 13 und über alle Schnittstellen 14, 15 geführte Fluidleitung aufweisen, über die einzelnen oder allen Signalverteilungsmodulen 3 bis 8 ein Fluid, beispielsweise zur Kühlung von Komponenten, zuführbar ist. Auch können die Direktverbindungen und der Signalübertragungsbus 28 in verschiedener Weise realisiert sein, beispielsweise durch elektrisch leitfähige Adern oder Lichtwellenleiter.

Ferner kann die Signalübertragungsvorrichtung 1 auch zum Steuern oder Regeln eines anderen Systems als eines Stromrichters ausgebildet sein. Beispielsweise kann die Signalübertragungsvorrichtung 1 zum Steuern oder Regeln eines hydraulischen oder pneumatischen Systems ausgebildet sein. In diesem Fall könnten einige Signalverteilungsmodule 5 bis 7 beispielsweise anstelle von Treibereinheiten 17 zur Ansteuerung von Schalteinheiten eines Stromrichters Steuereinheiten zur Ansteuerung von hydraulischen oder pneumatischen Ventilen aufweisen.

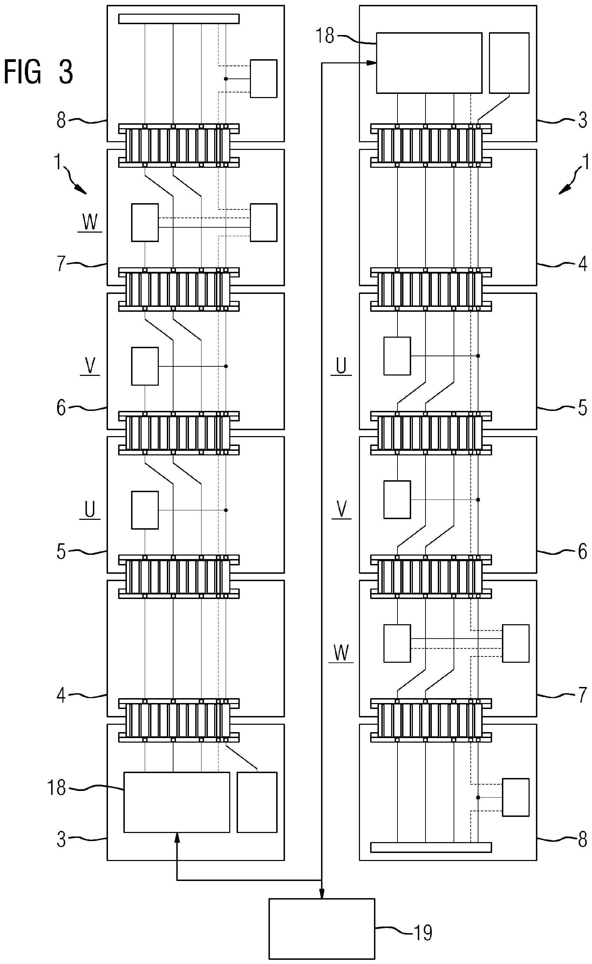

FIG 3 zeigt ein Blockdiagramm zweier Signalübertragungsvorrichtungen 1, die jeweils wie die in FIG 1 gezeigte Signalübertragungsvorrichtung 1 ausgebildet sind. Die hardwarenahen Regelungseinheiten 18 beider Signalübertragungsvorrichtungen 1 werden von einer übergeordneten Regelungseinheit 19 angesteuert. Die Signalverteilungsmodule 3 bis 8 der Signalübertragungsvorrichtungen 1 sind in einander entgegengesetzter Reihenfolge angeordnet. Dadurch weisen die Direktverbindungen der beiden Signalübertragungsvorrichtungen 1 einander entgegengesetzte Signalübertragungsrichtungen auf. Auf diese Weise wird eine Signalübertragung über Direktverbindungen in beiden Signalübertragungsrichtungen ermöglicht. Es können außerdem Relais für eine schaltbare Richtungsumkehr der Signalübertragungsrichtung der Direktverbindungen vorgesehen sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Signalübertragungsvorrichtung (1), umfassend
- mehrere hintereinander geschaltete Signalverteilungsmodule (3 bis 8), wobei je zwei benachbarte Signalverteilungsmodule (3 bis 8) miteinander durch eine Signalbrücke (9 bis 13) verbunden sind, die eine Schnittstelle (14,15) eines der beiden Signalverteilungsmodule (3 bis 8) mit einer dazu korrespondierenden Schnittstelle (14,15) des anderen Signalverteilungsmoduls (3 bis 8) verbindet,
- wenigstens eine Direktverbindung zwischen zwei Signalverteilungsmodulen (3 bis 8), die durch wenigstens eine Signalbrücke (9 bis 13) und über die durch die Signalbrücke (9 bis 13) verbundenen Schnittstellen (14,15) geführt ist, und
- einen durch alle Signalbrücken (9 bis 13) und über alle Schnittstellen (14,15) geführten Signalübertragungsbus (28),
- wobei die Schnittstellen (14,15) aller Signalverteilungsmodule (3 bis 8) identisch ausgeführt sind und alle Signalbrücken (9 bis 13) zwei Schnittstellen (14,15) auf dieselbe Weise verbinden.

2. Signalübertragungsvorrichtung (1) nach Anspruch 1, **gekennzeichnet durch** eine durch alle Signalbrücken (9 bis 13) und über alle Schnittstellen (14,15) geführte elektrische Stromversorgungsleitung (30).

3. Signalübertragungsvorrichtung (1) nach Anspruch 2, **dadurch gekennzeichnet, dass** wenigstens ein Signalverteilungsmodul (3 bis 8) Strom aus der Stromversorgungsleitung (30) entnimmt oder Strom in die Stromversorgungsleitung (30) einspeist.

4. Signalübertragungsvorrichtung (1) nach einem der vorhergehenden Ansprüche, **gekennzeichnet durch** eine durch alle Signalbrücken (9 bis 13) und über alle Schnittstellen (14, 15) geführte Fluidleitung.

5. Signalübertragungsvorrichtung (1) nach Anspruch 4, **dadurch gekennzeichnet, dass** wenigstens ein Signalverteilungsmodul (3 bis 8) Fluid aus der Fluidleitung entnimmt oder Fluid in die Fluidleitung einspeist.

6. Signalübertragungsvorrichtung (1) nach einem der vorhergehenden Ansprüche, **dadurch gekennzeichnet, dass** alle Signalbrücken (9 bis 13) gleich lang sind.

7. Signalübertragungsvorrichtung (1) nach einem der vorhergehenden Ansprüche, **dadurch gekennzeichnet, dass** jede Signalbrücke (9 bis 13) ein Flachbandkabel oder eine flexible Leiterplatte aufweist.

8. Signalübertragungsvorrichtung (1) nach einem der vorhergehenden Ansprüche, **dadurch gekennzeichnet, dass** wenigstens ein Signalverteilungsmodul (3 bis 8) zum Empfangen und/oder Senden von Signalen über den Signalübertragungsbus (28) ausgebildet ist.

9. Signalübertragungsvorrichtung (1) nach einem der vorhergehenden Ansprüche, **gekennzeichnet durch** Steckverbindungen, durch die jeweils eine Schnittstelle (14, 15) mit einer Signalbrücke (9 bis 13) verbindbar ist.

10. Signalübertragungsvorrichtung (1) nach einem der vorhergehenden Ansprüche, **dadurch gekennzeichnet, dass** jede Schnittstelle (14, 15) eines Signalverteilungsmoduls (3 bis 8) eine Anzahl von Direktverbindungskontakten (24) für Direktverbindungen aufweist, und dass die Direktverbindungskontakte (24) in einer für alle Schnittstellen (14,15) identischen Kontaktreihenfolge mit in dem Signalverteilungsmodul (3 bis 8) zu der Schnittstelle (14, 15) geführten Direktverbindungsleitungen (26) für Direktverbindungen verbunden sind.

11. Signalübertragungsvorrichtung (1) nach Anspruch 10, **dadurch gekennzeichnet, dass** in jedem Signalverteilungsmodul (3 bis 8), in dem wenigstens eine Direktverbindung endet, die Direktverbindungsleitungen (26) der in dem Signalverteilungsmodul (3 bis 8) endenden Direktverbindungen mit den gemäß der Kontaktreihenfolge ersten Direktverbindungskontakten (24) einer ersten Schnittstelle (14) des Signalverteilungsmoduls (3 bis 8) verbunden sind, und jeder weitere Direktverbindungskontakt (24) der ersten Schnittstelle (14) durch eine Direktverbindungsleitung (26) mit einem Direktverbindungskontakt (24) der zweiten Schnittstelle (15) verbunden ist, dessen Position in der Kontaktreihenfolge um die Anzahl der ersten Direktverbindungskontakte (24) vor der Position des mit ihm verbundenen Direktverbindungskontaktes (24) der ersten Schnittstelle (14) liegt.

12. Signalübertragungsvorrichtung (1) nach Anspruch 11, **dadurch gekennzeichnet, dass** jede Signalbrücke (9 bis 13) jeden Direktverbindungskontakt (24) einer der beiden durch die Signalbrücke (9 bis 13) verbundenen Schnittstellen (14,15) mit genau einem Direktverbindungskontakt (24) der anderen der beiden durch die Signalbrücke (9 bis 13) verbundenen Schnittstellen (14,15) verbindet, wobei die miteinander durch die Signalbrücke (9 bis 13) verbundenen Direktverbindungskontakte (24) dieselbe Position in der Kontaktreihenfolge aufweisen.

13. Signalübertragungsvorrichtung (1) nach einem der vorhergehenden Ansprüche, **dadurch gekennzeichnet, dass** die Signalverteilungsmodule (3 bis 8) zur Steuerung oder Regelung eines Stromrichters ausgebildet sind.

14. Signalübertragungsvorrichtung (1) nach Anspruch 13, **dadurch gekennzeichnet, dass** wenigstens ein Signalverteilungsmodul (3 bis 8) eine Treibereinheit (17) für wenigstens eine elektronische Schalteinheit des Stromrichters aufweist, zu der eine Direktverbindung führt.

15. Verfahren zum Übertragen von Signalen mit einer gemäß einem der vorhergehenden Ansprüche ausgebildeten Signalübertragungsvorrichtung (1), wobei
- an erste Signale eine höhere Latenzanforderung als an zweite Signale gestellt wird,
- ein erstes Signal über eine Direktverbindung der Signalübertragungsvorrichtung (1) übertragen wird und
- ein zweites Signal über den Signalübertragungsbus (28) der Signalübertragungsvorrichtung (1) übertragen wird.
